# EUROPEAN PATENT SPECIFICATION

(11) **EP 2 624 112 B1**
(45) Date of publication and mention of the grant of the patent: **19.06.2019**
(21) Application number: 11829309.1
(22) Date of filing: 29.09.2011
(51) Int. Cl.: G06F 3/048, G06Q 30/02, G06F 3/0482, G06F 3/0481

(54) **VIEWING DEVICE, VIEWING METHOD, NON-TRANSITORY COMPUTER-READABLE RECORDING MEDIUM WHEREON PROGRAM IS RECORDED, AND SCRIPT PROGRAM**
BETRACHTUNGSVORRICHTUNG, BETRACHTUNGSVERFAHREN, NICHTFLÜCHTIGES COMPUTERLESBARES AUFZEICHNUNGSMEDIUM MIT DARAUF AUFGEZEICHNETEM PROGRAMM UND SKRIPTPROGRAMM
DISPOSITIF DE VISUALISATION, PROCÉDÉ DE VISUALISATION, SUPPORT D'ENREGISTREMENT NON TRANSITOIRE LISIBLE PAR UN ORDINATEUR SUR LEQUEL UN PROGRAMME EST ENREGISTRÉ, ET PROGRAMME DE SCRIPT

(30) Priority: 30.09.2010 JP 2010222982; 30.09.2010 JP 2010222981
(43) Date of publication of application: 07.08.2013
(73) Proprietor: Rakuten, Inc., Tokyo 158-0094 (JP)
(72) Inventor: IINO Tsukasa, Tokyo 140-0002 (JP)
(74) Representative: Price, Christopher
(86) International application number: PCT/JP2011/072451
(87) International publication number: WO 2012/043756

(56) References cited:
- JP-A- 2009 245 239
- US-A1- 2009 251 410
- US-B1- 6 396 513

## Description

### Technical Field

The present invention relates to a viewing device, a viewing method, a computer-readable recording medium whereon a program is recorded, and a script program.

### Background Art

Conventionally, technologies for displaying various content, such as electronic documents and images, on a computer screen to let a user to view such content are widely used.

One such kind of content is a web page. Web pages are electronic documents structured and described in HTML (HyperText Markup Language), and are available to the public through the Internet. A user views the web pages through a viewing program called a browser.

There is proposed a technology topost advertisements with link functions to advertising sites on web pages when users view content which allows the user to be connected to an advertising site when the user clicks the advertisements (see, for example, Patent Literature 1).

Patent literature 2 discloses a pointer display on a touch screen device. When a user may place his or her finger on the touch screen, a triangular shaped pointer is generated. The tip of the pointer may orient according to movement of the user's finger, or to point towards link buttons.

### Prior Art Literature

### Patent Literature

Patent Literature 1: Unexamined Japanese Patent Application Kokai Publication No. 2009-58988
Patent Literature 2: US patent application US2009/0251410 A1.

### Disclosure of the Invention

### Problem to be Solved by the Invention

When a user views content, it is preferable that the content is structured to induce the user to take notice and have an interest and to therefor view the content for as long as possible. In particular, when the content contains a part where it is desired that the user pays attention, such asfor an advertisement, there is a strong demand for a technology to induce the user to have an interest in such a part.

The present invention has been made in view of such aspects, and it is an objective of the present invention to provide a viewing device, a viewing method, a computer-readable recording medium whereon a program is recorded, and a script program which are suitable for inducing a user to take notice and have an interest in a piece of content or in a specific part contained therein.

### Means for Solving the Problem

To accomplish the above objective, a viewing device according to a first aspect of the present invention includes: a display that displays a piece of content on a display screen and displays a cursor that moves based on user operation, the piece of content being part of content on a virtual screen (400) which extends outside the display screen; an identifier that identifies a position where a portion within the content and set as an emphasis target is on the virtual screen), the emphasis target not being displayed on the display screen, the emphasis target being a link element specifying a URL of other content; and a changer that changes a cursor form in accordance with a direction from a position where the cursor is displayed to the identified position so as to indicate said direction.

The above-explained viewing device may further include: a detector that detects when a predetermined event has occured; and a setter which sets a portion within the content to be the emphasis target and which then resets another portion within the content to be the emphasis target the predetermined event has been detected.

In the above-explained viewing device, the content may be a structured document including a plurality of elements, the portion set as the emphasis target by the setter may be any one of plural candidate elements that are elements to which a predetermined candidate attribute is added among the plurality of elements, and the predetermined event may occur when the display position of the cursor on the display screen overlaps an area where a candidate element set as an emphasis target is displayed on the display screen.

In the above-explained viewing device, the setter may set the emphasis target again at random while giving a preference to the candidate element that has not already been set as the emphasis target among the candidate elements since the content has been displayed.

In the above-explained viewing device, a next candidate attribute that specifies another candidate element may be given to at least some of the candidate elements within the content, and when the next candidate attribute is added to the candidate element set as the emphasis target, the setter may reset the emphasis target while giving a preference to the candidate element specified by the next candidate attribute.

In the above-explained viewing device, the display may display the content on the display screen in a scrollable manner, and when the candidate element specified by the next candidate attribute of the candidate element set as the emphasis target is not displayed on the display screen, and when an occurrence of the predetermined event is detected, the display may automatically scroll the content in such a way that a range of the content displayed on the display screen becomes close to the candidate element specified by the next candidate attribute.

In the above-explained viewing device, when the candidate element set as the emphasis target becomes close to a boundary with the range or when the candidate element specified by the next candidate attribute of the candidate element set as the emphasis target is contained within the range, the display may terminate the automatic scrolling.

In the above-explained viewing device, the display may move the cursor to a position where the candidate element set as the emphasis target is displayed on the display screen while the automatic scrolling is being performed.

The above-explained viewing device may further include an arranger that disposes a predetermined element set as a further emphasis target in the content.

In the above-explained viewing device, in a peripheral area surrounding a position where the predetermined element is disposed on the display screen and not containing an area where the predetermined element is disposed on the display screen, when a display position of the cursor on the display screen is (a) contained, the changer may change the form of the cursor to a form that approximates and indicates a direction from the position where the cursor is displayed on the display screen to the disposed position of the predetermined element on the display screen, and (b) not contained, the changer may change the form of the cursor back to a preset form.

In the above-explained viewing device, the arranger may dispose a plurality of the predetermined elements within the content, the display may display other predetermined content instead of the content on the display screen. The arranger may also display predetermined additional information together with the content on the display screen when a number of the elements where the cursor enters among the plurality of the predetermined elements reaches a predetermined number on the display screen.

In the above-explained viewing device, the display may display, together with the content, at least one of following on the display screen: (a) a number of the elements where the cursor enters; (b) the predetermined number; and (c) a number obtained by subtracting the number of the elements where the cursor enters from the predetermined number, while a displayed position of the cursor on the display screen is included within an area where the predetermined element is disposed.

In the above-explained viewing device, in the area where the predetermined element is disposed, when the cursor position displayed on the display screen is: (a) included within, the display may make the predetermined element invisible on the display screen; or (b) not included within, the display may make the predetermined element visible on the display screen.

A viewing method according to a second aspect of the present invention is executed by a computer that displays, on a display screen, a piece of content and a cursor moved based on an operation given by a user, the piece of content being part of content on a virtual screen (400) which extends outside the display screen, and the viewing method includes: an identifying step of identifying a position where a portion contained in the content and set as an emphasis target is on the virtual screen), the emphasis target not being displayed on the display screen, the emphasis target being a link element specifying a URL of other content; and a changing step of changing a cursor form in accordance with a direction from a position where the cursor is displayed to the identified position so as to indicate said direction.

A computer-readable recording medium according to a third aspect of the present invention has stored therein a program that causes a computer which displays, on a display screen, a piece of content, which is part of content on a virtual screen which extends outside the display screen, and a cursor moved based on an operation given by a user to function as: an identifier that identifies a position where a portion of the content and set as an emphasis target is displayed on the virtual screen), the emphasis target not being displayed on the display screen, the emphasis target being a link element specifying a URL of other content; and a changer that changes a cursor form in accordance with a direction from a position where the cursor is displayed to the identified position to indicate said direction.

A script program according to a fourth aspect of the present invention causes a computer which functions, upon running a viewing program, as a display displaying a piece of content and a cursor moved based on an operation given by a user on a screen to function as: an identifier that identifies a position where a portion contained in the content and set as an emphasis target is displayed on the screen; and a changer that changes a cursor form in accordance with a direction from a position where the cursor is displayed to the identified position so as to indicate said direction.

The program of the present invention can be stored in a computer-readable non-transitory recording medium, such as a compact disc, a flexible disc, a hard disk, a magneto-optical disc, a digital video disc, a magnetic tape, or a semiconductor memory. Moreover, such a recording medium can be distributed and sold independently from a computer.

Moreover, the program of the present invention may be configured in such a manner as to be loaded to a recording medium like a RAM (Random Access Memory) writable by a computer from the above-explained recording medium, temporary (temporary) recorded therein, and a CPU (Central Processing Unit) may read, interpret, and run such a program stored in the RAM.

Furthermore, the program of the present invention may be distributed and sold through a transitory transmission medium like a computer communication network independently from a computer that runs the program.

### Effects of the Invention

According to the present invention, a viewing device, a viewing method, a computer-readable recording medium whereon a program is recorded, and a script program are provided which are suitable for inducing a user to notice and have an interest in a piece of content itself or to a specific part contained therein by indicating a direction to the specific part contained in the content using the form of a cursor.

### Brief Description of Drawings

FIG. 1A is a configuration diagram illustrating how an information processing device according to an example embodiment of the present invention is connected to another device;
FIG. 1B is a configuration diagram illustrating an example configuration of the information processing device according to embodiment of the present invention;
FIG. 2 is a configuration diagram illustrating a configuration of a viewing device according to an example embodiment of the present invention;
FIG. 3 is a flowchart illustrating a viewing process executed by the viewing device according to an example embodiment of the present invention;
FIG. 4A is an explanation drawing illustrating a process of a change in the cursor form;
FIG. 4B is an explanation drawing illustrating a process of a change in the cursor form;
FIG. 4C is an explanation drawing illustrating a process of a change in the cursor form;
FIG. 4D is an explanation drawing illustrating a process of a change in the cursor form;
FIG. 5A is an explanation drawing illustrating a process for setting a link element as an emphasis target;
FIG. 5B is an explanation drawing illustrating a process for setting a link element as an emphasis target;
FIG. 5C is an explanation drawing illustrating a process for setting a link element as an emphasis target;
FIG. 5D is an explanation drawing illustrating a process for setting a link element as an emphasis target;
FIG. 5E is an explanation drawing illustrating a process for setting a link element as an emphasis target;
FIG. 6 is a flowchart illustrating a scrolling process executed by the viewing device according to the example embodiment of the present invention;
FIG. 7A is an explanation drawing illustrating a process of automatic scrolling;
FIG. 7B is an explanation drawing illustrating a process of the automatic scrolling;
FIG. 7C is an explanation drawing illustrating a process of the automatic scrolling;
FIG. 7D is an explanation drawing illustrating a process of the automatic scrolling;
FIG. 8 is a configuration diagram illustrating a configuration of a viewing device according to another example of the embodiment of the present invention;
FIG. 9A is a diagram illustrating link elements disposed by an arranger according to another example of the embodiment of the present invention;
FIG. 9B is a diagram illustrating a modified example of a peripheral area around the link element;
FIG. 10 is a flowchart illustrating a viewing process executed by the viewing device according to another example of the embodiment of the present invention;
FIG. 11A is a diagram illustrating a process of a change in the form of a cursor;
FIG. 11B is a diagram illustrating a process of a change in the cursor form;
FIG. 11C is a diagram illustrating a process of a change in the cursor form;
FIG. 12A is a diagram illustrating a process during which the cursor enters the link element, and additional information is updated;
FIG. 12B is a diagram illustrating a process during which the cursor enters the link element, and the additional information is updated;
FIG. 12C is a diagram illustrating a process during which the cursor enters the link element, and the additional information is updated;
FIG. 12D is a diagram illustrating a process during which the cursor enters the link element, and the additional information is updated;
FIG. 12E is a diagram illustrating a process during which the cursor enters the link element, and the additional information is updated; and
FIG. 12F is a diagram illustrating a process during which the cursor enters the link element, and the additional information is updated.

### Mode for Carrying Out the Invention

An explanation will now be given below of embodiments of the present invention with reference to the drawings. In order to facilitate understanding, the embodiments realizing the present invention using an information processing device like a personal computer will be explained below through the following first embodiment and second embodiment.

The invention is defined in the appended independent claims. Further aspects of the invention are outlined in the appended dependent claims. Embodiments which do not fall within the scope of the claims do not describe part of the invention.

### First Embodiment

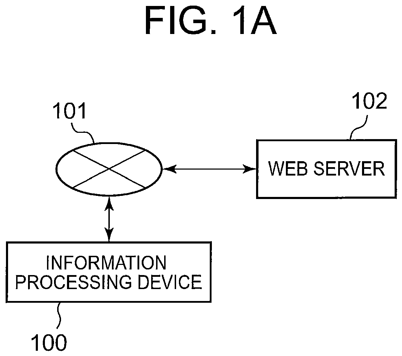

As illustrated in FIG. 1A, an information processing device 100 according to a first embodiment of the present invention is connected to a web server 102 through a communication network 101 like the Internet.

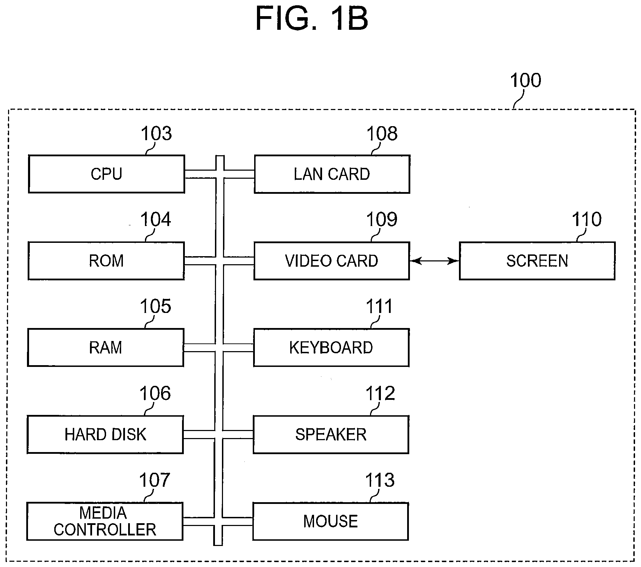

As illustrated in FIG. 1B, the information processing device 100 includes a CPU (Central Processing Unit) 103, a ROM (Read Only Memory) 104, a RAM (Random Access Memory) 105, a hard disk 106, a media controller 107, a LAN (Local Area Network) card 108, a video card 109, a screen (a display) 110, a keyboard 111, a speaker 112, and a pointing device (hereinafter, referred to as a mouse) 113.

The CPU 103 executes a software process in accordance with a program stored in the ROM 104 or in the hard disk 106, thereby controlling the whole information processing device 100. When the CPU 103 runs the program, the RAM 105 temporarily (temporarily) stores processing-target data while such data is necessary.

The hard disk 106 stores a table having various data stored therein in non-volatile and non-transitory manners. The information processing device 100 may include a flash memory or other memory devices instead of the hard disk 106.

The media controller 107 reads various data and programs from non-transitory recording medium including a flash memory, a CD (Compact Disc), a DVD (Digital Versatile Disc), or a Blu-ray Disc (Blue-ray Disc) (registered trademark).

The LAN card 108 receives data from and transmits information between the information processing device 100 and the web server 102 which are connected together via the communication network 101. The information processing device 100 can obtain various programs from the web server 102 using the communication network 101 as a temporary transmission medium.

The keyboard 111 and the mouse 113 accept a signal or inputting of information in accordance with an operation by a user.

The video card 109 renders an image based on digital signals output by the CPU 103, and outputs image signals representing the rendered image. The screen 110 displays the image in accordance with the image signals output by the video card 109, and is realized by an LCD (Liquid Crystal Display) or the like. The speaker 112 outputs sounds based on signals output by the CPU 103.

The web server 102 includes a database managing various content, and releases the content managed by the database over the Internet.

In addition to the release of, as content, an HTML document which is a structured electronic document having texts as basic information and images as additional information, only the images can be released as the content, or only the text information can be released as the content.

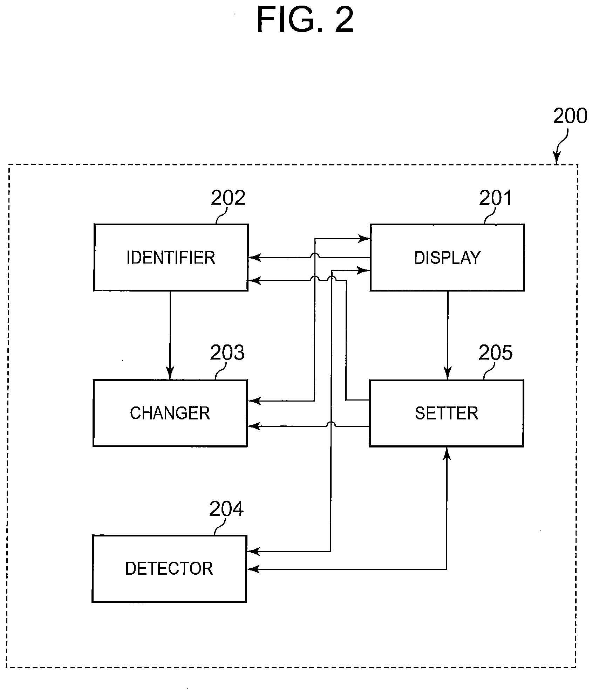

The CPU 103 of the information processing device 100 executes a viewing program for a browser and a script program associated with the content in advance which are stored in the ROM 104 or the hard disk 106, thereby functioning as a viewing device 200 illustrated in FIG. 2.

The script program can be described in a programming language, such as JavaScript, JScript, or ECMAScript. When an HTML document is employed as the content, the script program is obtained from a location described in the HTML document.

When only the images are employed as the content, a plug-in program prepared in advance is introduced in the viewing program, or the browser program itself is caused to realize the functions of the present invention, thereby performing the same process on the images as that of the HTML document.

As illustrated in FIG. 2, the viewing device 200 includes a display 201, an identifier 202, a changer 203, a detector 204, and a setter 205.

The display 201 displays, on the screen 110, the content and a cursor that moves on the screen 110 based on an operation by the user. Moreover, when the whole piece of content cannot be displayed on the screen 110, the content is displayed in a scrollable manner. The cursor moves on the screen 110 by an operation given to the keyboard 111 or the mouse 113 by the user.

The identifier 202 identifies a position of a part of the content and set as an emphasis target by the setter 205 to be discussed later on the screen 110.

All of the content cannot be displayed on the screen 110 depending on the size thereof. In this case, the identifier 202 presumes a virtual screen having all of the content drawn therein, and identifies a position where the part set as the emphasis target should be drawn in the virtual screen.

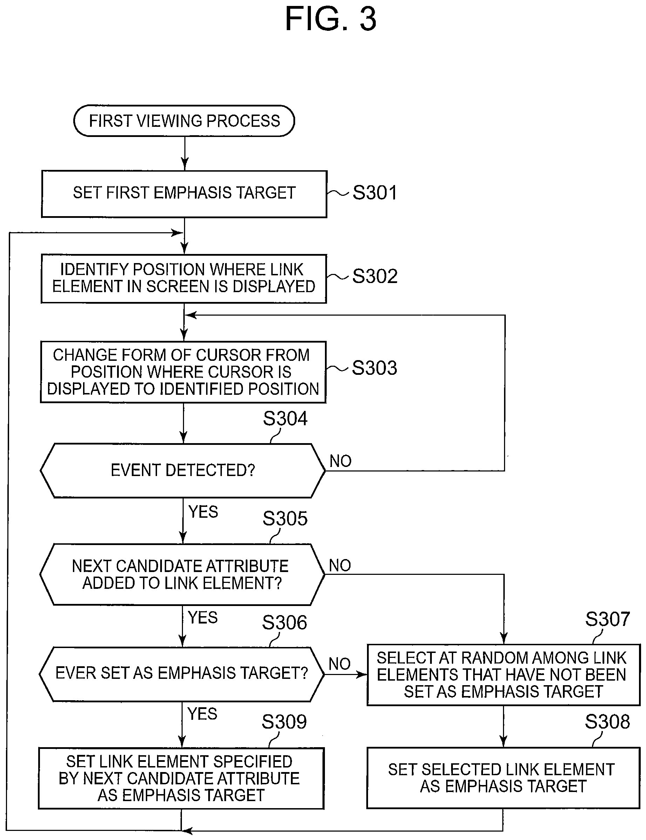

The changer 203 changes the cursor form in accordance with a direction from a position of the displayed cursor to a position identified by the identifier 202. A process of a change in the cursor form will be discussed later with reference to the flowchart illustrated in FIG. 3.

As explained above, no emphasis target is displayed on the screen 110 in some cases. In such a case, it is appropriate if the cursor form be changed based on a direction from the cursor to the emphasis target in the virtual screen.

The detector 204 detects an occurrence of a predetermined event. The predetermined event occurs when, for example, a position where the cursor is displayed on the screen 110 overlaps an area where the part set as the emphasis target by the setter 205 is displayed on the screen 110.

The setter 205 sets a part of the content as an emphasis target. The part set as the emphasis target is any of candidate elements which are elements having a predetermined candidate attribute added thereto among a plurality of elements contained in the content.

For example, the candidate attribute can be set in such a way that a specific banner advertisement (an image having a hyperlink to an HTML document corresponding to a specific URL (Uniform Resource Locator) set therein) contained in the HTML document becomes the candidate element.

When the detector 204 detects an occurrence of the predetermined event, the setter 205 sets again another part contained in the content as the emphasis target. The selection basis of the emphasis target will be discussed later with reference to the flowchart illustrated in FIG. 3.

When the detector 204 detects the event, if no link element specified by the next candidate attribute to a link element set as the emphasis target is displayed on the screen 110, the display 201 automatically scrolls the content in such a way that the range of the content displayed on the screen 110 becomes closer to the link element specified by the next candidate attribute.

The display 201 terminates the automatic scrolling when the link element set as the emphasis target adjoins the boundary of the range, or when the link element specified by the next candidate attribute to the link element set as the emphasis target is included in the range. Moreover, the display 201 moves the cursor to a position where the link element set as the emphasis target is displayed on the screen 110 while the automatic scrolling is being performed.

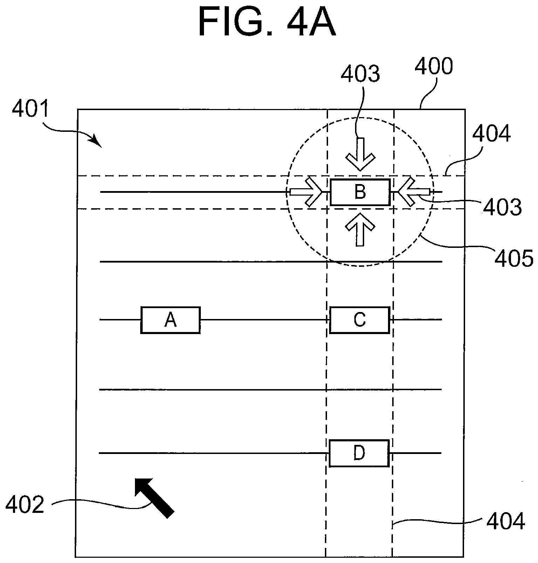

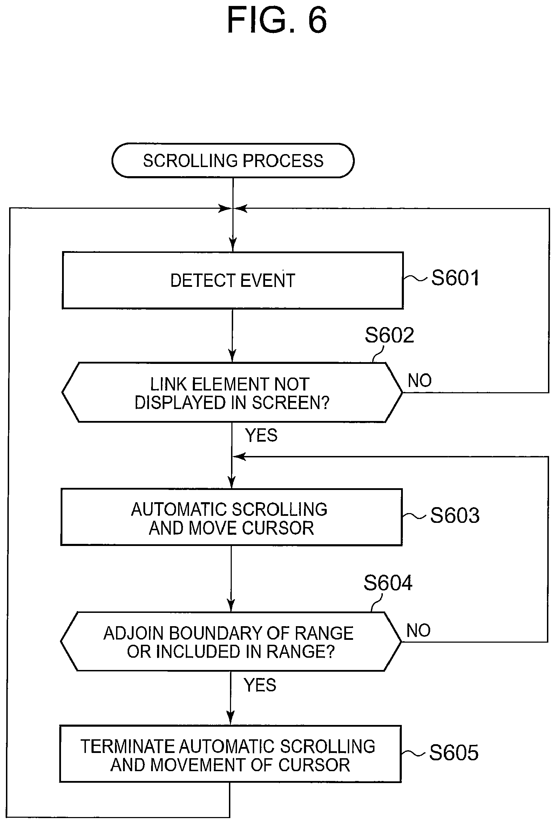

An example viewing process 1 according to the viewing device 200 of the present embodiment explained above will be explained in detail with reference to the flowcharts illustrated in FIGS. 3 and 6, and example displays of FIGS. 4A to 4D, 5A to 5E, and 7A to 7D.

FIGS. 4A to 4D, 5A to 5E, and 7A to 7D illustrate how a piece of content 401 is rendered on a virtual screen 400. A part of or the whole rendering result is displayed on the screen 110, and when a part is displayed, a displayed area can be scrolled by an operation by the user.

In FIGS. 4A to 4D, 5A to 5E, and 7A to 7D, link elements A, B, C, and D are displayed in a form surrounded by a box. The link elements specify the URLs of other content, and are elements that desirably cause the user to have an interest or a notice.

When the user clicks the button of the mouse 113 with a cursor 402 overlapping the link element, the content of a linked destination is displayed on the screen 110 instead of the presently-displayed content. Moreover, there is a case in which a new window is created by a click of the link element, and the content of the linked destination are displayed in that window.

After the content 401 is displayed on the screen 110, for example, the link element to be set as the initial emphasis target by the setter 205 is selected at random among the link elements A, B, C, and D. The header link element may be selected among the plurality of link elements in the content. In this example, it is presumed that the link element B is set as the initial emphasis target.

It is presumed that the next candidate attribute that specifies the link element A is added to the link element B. It can be expressed in an html source as follow:

```
           <a href = "X"
                next = "A"
                name = "B"> B </a>
```

In this expression, X is the URL of a new piece of content. The next attribute indicates the next candidate attribute. Since the value of the next candidate attribute is A, it is clear that the candidate element to be specified as the emphasis target next to the link element B is the link element A. The name attribute is an identification name attribute for the link element. Since the identification name attribute is B, the above-explained link element (<a> element) is identified as the link element B.

It is presumed that the link elements A, C, and D have not been set as the emphasis target, and have no next candidate attribute added thereto after the content 401 is displayed on the screen 110. It can be determined from the value of a flag whether or not the link element has been set as the emphasis target. For example, a flag may be provided for each link element having a predetermined attribute added thereto, and the flag corresponding to the link element set as the emphasis target may be updated.

First, the user accesses the content 401 illustrated in FIGS. 4A to 4D, 5A to 5E, and 7A to 7D and provided by the web server 102 through the information processing device 100 via the communication network 101. The CPU 103 of the information processing device 100 displays the content 401 on the screen 110 through the browser program stored in the ROM 104 or in the hard disk 106. The processes illustrated by the flowcharts of FIGS. 3 and 6 are processes executed by the viewing device 200 which runs the script program specified in the content 401.

When the content 401 is displayed on the screen 110, the setter 205 sets the link element selected at random among the link elements having the predetermined candidate attribute added thereto (link elements having, for example, the identification name attribute (name attribute) added thereto) and contained in the content 401 as the first emphasis target (step S301). In this example, link element B is set as the first emphasis target.

The identifier 202 identifies the position of the link element B set as the emphasis target by the setter 205 in the step S301, and surrounds the link element B with attention arrows 403 and attention lines 404 to prompt the user to pay attention (step S302). In the respective figures, the cursor 402 which is movable by the keyboard 111 or the mouse 113 and the attention arrows 403 are indicated with a black color, and a white color, respectively. This step can be omitted, and how to get attention may be by other methods. For example, only the colors of the attention arrows 403 or the attention lines 404, or the color of the link element B may be changed.

Next, when the user moves the cursor 402 toward the link element B by operating the keyboard 111 or the mouse 113, the changer 203 changes the form of the cursor 402 in accordance with a direction from the position where the cursor 402 is displayed to the identified position, that is, the position of the link element B. In the present embodiment, the direction of the arrow of the cursor 402 is changed from a preset direction. The preset direction is the direction of the arrow of the cursor 402 illustrated in FIG. 4A.

Eight images having respective angles of the arrows set to 0 degree, 45 degrees, 90 degrees, 135 degrees (the preset direction in the present embodiment), 180 degrees, 225 degrees, 270 degrees, and 315 degrees are prepared for the cursor 402, and the cursor is displayed on the screen 110 using the image having the angle in accordance with a direction from a position where the cursor 402 is displayed toward the position of the link element set as the emphasis target..

The changer 203 changes the form of the cursor 402 when the cursor 402 is contained in an area 405 with a predetermined dimension surrounding the link element set as the emphasis target. The area 405 is a circle around the link element in this example, but may be a rectangle or an ellipse.

When the area 405 is set to be sufficiently large relative to the size of the content 401, the form of the cursor 402 changes in accordance with a direction from a position where the cursor 402 is displayed toward the position of the link element set as the emphasis target (not always displayed on the screen 110) regardless of the position of the cursor 402 on the screen 110.

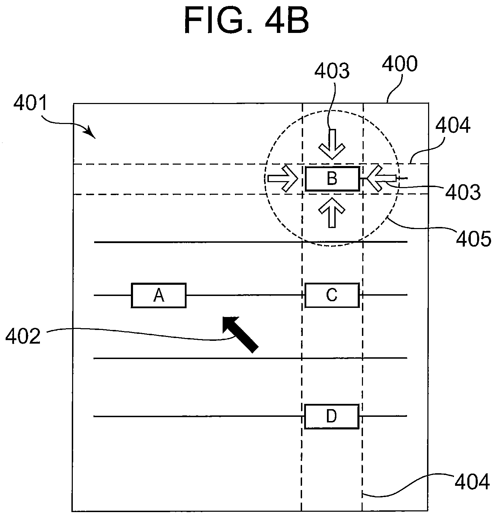

A form change of the cursor 402 will now be explained with reference to FIGS. 4A to 4D. When the cursor 402 is moved from the position in FIG. 4A to the position in FIG. 4B, since the position of the cursor 402 is apart from the position of the area 405 surrounding the link element B, the form of the cursor 402 remains the same.

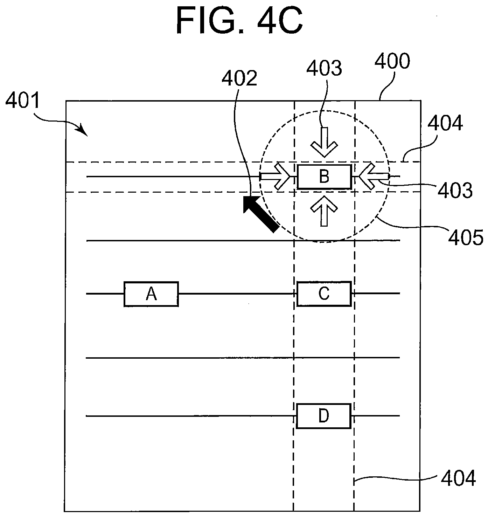

When the cursor 402 is moved from the position indicated in FIG. 4B to the position indicated in FIG. 4C, the position of the cursor 402 has become closer to the position of the area 405 surrounding the link element B, but is not contained in the area 405, the form of the cursor 402 remains the same.

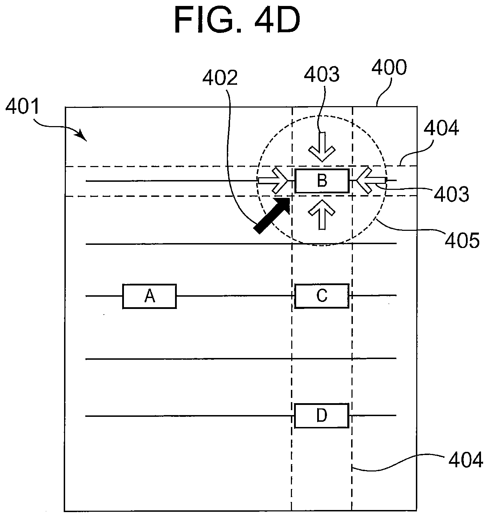

When the cursor 402 is moved from the position in FIG. 4C to the position in FIG. 4D, since the position of the cursor 402 is contained in the area 405 surrounding the link element B, the form of the cursor 402 is changed so as to indicate a direction matching the direction of the link element B. The above processes are the processes executed in step S303.

When the cursor 402 is moved out from the area 405, the cursor returns to its preset form.

While the user is moving the cursor 402 in the step S303, the detector 204 determines whether or not the predetermined event occurs (step S304).

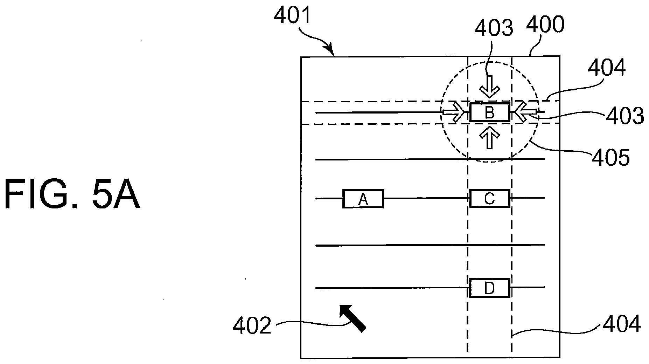

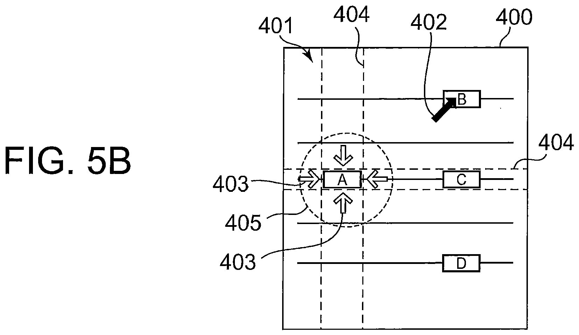

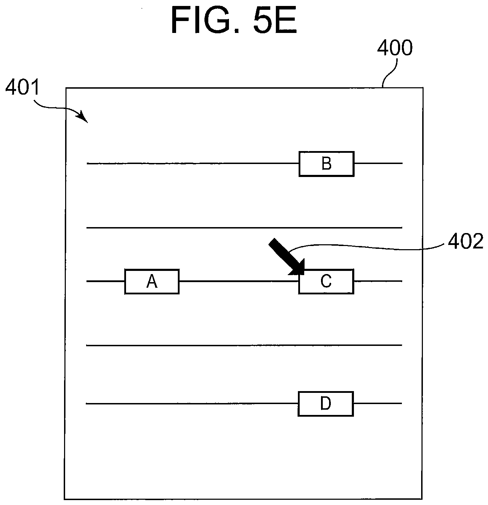

In the present embodiment, it is presumed that the predetermined event occurs when a position where the cursor 402 is displayed on the screen 110 overlaps an area where the link element B is displayed on the screen 110. That is, the event occurs when the condition in FIG. 5A has changed to the condition in FIG. 5B.

When no event is detected (step S304: NO), the detector 204 returns to the step S303, and keeps detecting for the event.

When the event is detected (step S304: YES), the setter 205 determines whether or not the next candidate attribute is added to the link element B (step S305).

When no next candidate attribute is added (step S305: NO), the setter 205 selects the link element which has not been set as the emphasis target yet after the display of the content 401 is started (step S307). If no next candidate attribute is added to the link element B, for example, any one of the link elements A, C, and D other than the link element B is selected at random in the case of FIG. 5B.

The setter 205 sets the link element having selected in the step S307 as the emphasis target (step S308). Thereafter, the process returns to the step S302, and the step S302 to step S309 are repeated.

When the next candidate attribute is added (step S305: YES), the setter 205 determines whether or not the link element A specified by the next candidate attribute added to the link element B had not been set as the emphasis target yet (step S306).

When the link element A had been already set as the emphasis target (step S306: NO), the setter 205 selects the link element through the step 307. That is, if the link element A had been already set as the emphasis target, the setter 205 selects any one of the link elements C and D, and sets in the step S308 the selected link element as the emphasis target.

When the link element A had not been set as the emphasis target before (step S306: YES), the setter 205 sets the link element A as the emphasis target (step S309). Thereafter, the process returns to the step S302, and the step S302 to the step S309 are repeated.

FIGS. 5A to 5E illustrate processes of sequentially setting the link elements as the emphasis targets in accordance with the flowchart illustrated in FIG. 3.

First, as illustrated in FIG. 5A to FIG. 5B, when the cursor 402 moves into the displayed area of the link element B, the emphasis target is set from the link element B to the link element A.

Next, as illustrated in FIG. 5B to FIG. 5C, when the cursor 402 moves into the displayed area of the link element A, the emphasis target is set from the link element A to the link element D.

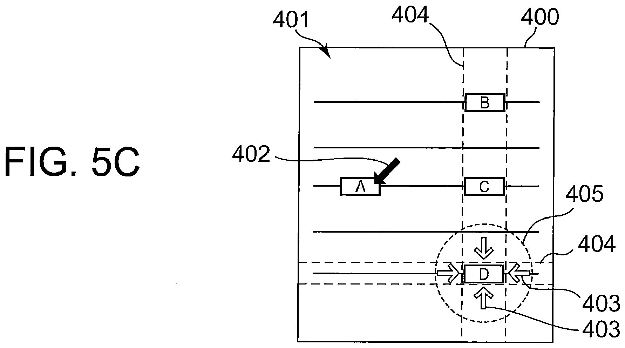

Moreover, as illustrated in FIG. 5C to FIG. 5D, when the cursor 402 moves into the displayed area of the link element D, the emphasis target is set from the link element D to the link element C.

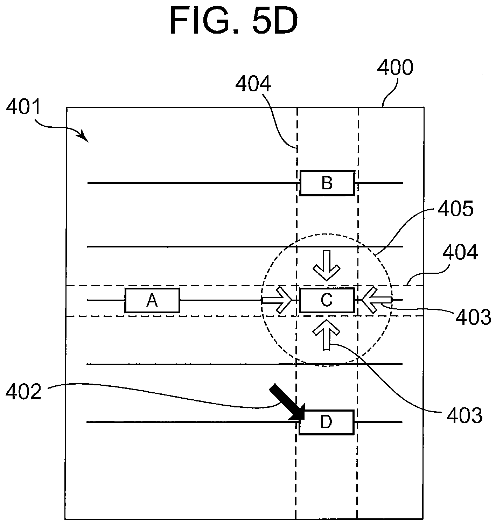

Furthermore, as illustrated in FIG. 5D to FIG. 5E, when the cursor 402 moves into the displayed area of the link element C, no emphasis target is left any more, and the process is terminated.

At a time point of terminating the process, for example, a link element E specifying the URL of content that give a benefit to the user when the user accesses such an URL may be disposed likewise a second embodiment to be discussed later. Moreover, such content may be automatically displayed.

When the cursor 402 enters the link element set as the emphasis target, since the new link element is set as the new emphasis target, the area 405 becomes an area surrounding the new link element. Hence, the cursor 402 returns to the preset form since the cursor moves away from the area 405. In this case, a configuration may be employed in which the cursor returns to the preset form as soon as the new emphasis target is set, or a configuration may be employed in which the cursor 402 returns to the preset form when the cursor is moved after the new emphasis target is set.

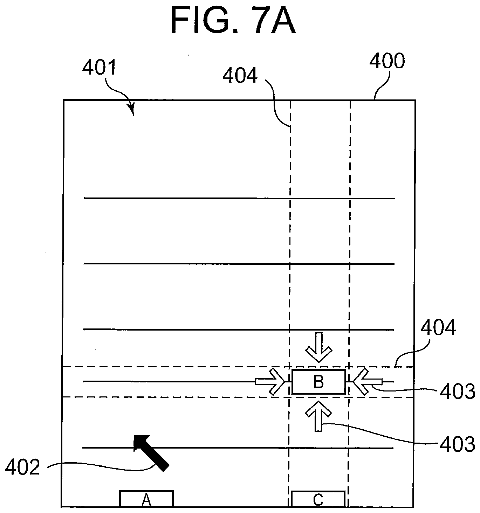

An example scrolling process by the display 201 when the detector 204 detects the event will now be explained in detail with reference to the flowchart illustrated in FIG. 6, and FIGS. 7A to 7D. The illustration of the area 405 is omitted in FIGS. 7A to 7D to facilitate understanding.

The display 201 determines whether or not the link element A specified by the next candidate attribute added to the link element B is displayed on the screen 110 (step S602) after the detector 204 detects the event (step S601). For example, in a case of the situation illustrated in FIG. 7A, since the link element A is not displayed at all on the screen 110, it is determined that no link element A is displayed.

When the link element A is displayed on the screen 110 (step S602: NO), the process returns to the step S601 and the detection of the event is awaited.

When no link element A is displayed on the screen 110 (step S602: YES), the display 201 automatically scrolls the content 401 in such a way that the range of the content 401 displayed on the screen 110 becomes close to the link element A specified by the next candidate attribute of the link element B. Moreover, the display 201 moves the cursor 402 to a position where the link element A set as the emphasis target is displayed on the screen 110 while performing the automatic scrolling. The above process is the process in step S603.

During the automatic scrolling in the step S603, the display 201 determines whether the link element A set as the emphasis target adjoins the boundary of the range explained in the step S603, or is included in the range (step S604).

When the link element A is not included in the range (step S604: NO), the display 201 returns to the step S603, and continues the automatic scrolling and the movement of the cursor 402.

When the link element A is included in the range (step S604: YES), the display 201 terminates the automatic scrolling and the movement of the cursor 402 (step S605). Thereafter, the process returns to the step S601 and the detection of the event is awaited.

FIGS. 7A to 7D illustrate processes of automatically scrolling the content 401 in accordance with the flowchart illustrated in FIG. 6.

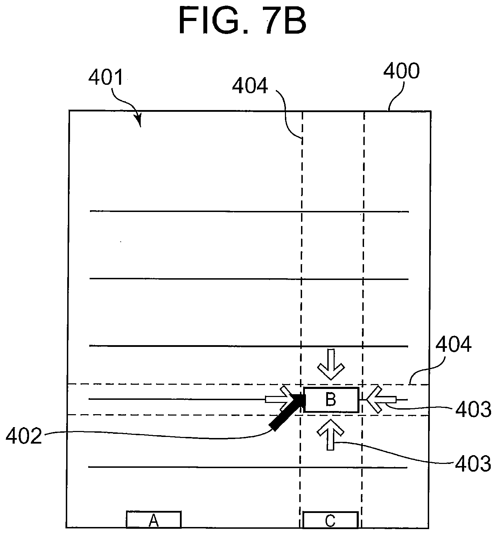

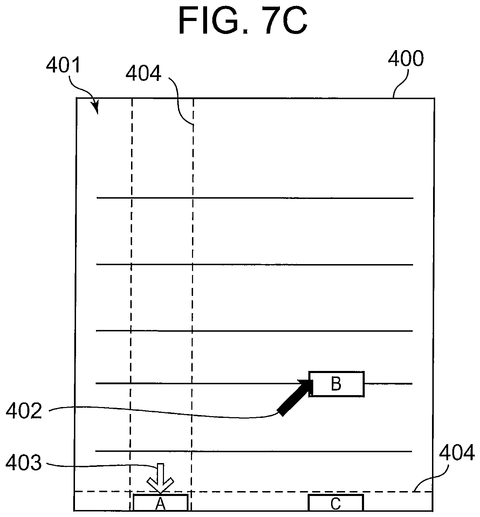

First, when the cursor 402 moves as illustrated in FIG. 7A and FIG. 7B, the emphasis target is reset from the link element B to the link element A as illustrated in FIG. 7C.

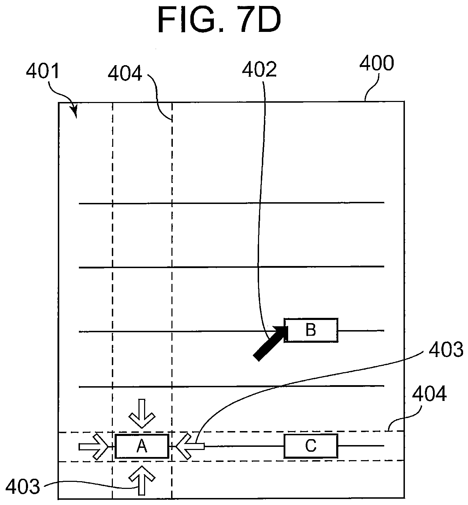

Since only the half of the link element A is displayed in the case of FIG. 7C, the content 401 is automatically scrolled as illustrated in FIG. 7C and FIG. 7D.

As explained above, according to the viewing device 200 of the present embodiment, since the new link element is set as the emphasis target every time the user moves the cursor 402 to the link element set as the emphasis target in the content 401, the user begins to view the content 401 with an interest, and the time for viewing the content 401 becomes long.

When the cursor 402 becomes close to the link element, the form of the cursor 402 changes, causing the user to view the content 401 with an interest.

Since it is expected that the cursor 402 passes through over (upper face) of the plurality of candidate elements set in advance, such candidate elements and other link elements disposed therearound can get attention from the user.

In particular, when the next candidate attribute is utilized, since it is expected that the cursor 402 passes through over (upper face) of the plurality of candidate elements set in advance in a preset order, such candidate elements and other link elements disposed therearound get attention from the user in a specific order.

In the above explanation, the electronic documents described in HTML was explained as the content, but a configuration is applicable which displays one image or a plurality of images disposed side by side as the content on the screen 110.

For example, this is a configuration which expresses a map by one image or a plurality of images disposed side by side, and which employs, as emphasis targets, places where user attention is desiredon the map, such as destinations searched or specified by the user. This configuration can be utilized for a route map and a guide of sights, shops, and the like near the present location.

According to this configuration, when the cursor moves near the destination in the map, since the facts that the destination is near and a direction from the cursor toward the destination are displayed on the screen 110 by the change in the form of the cursor, the same advantages as those of the above-explained configurations can be obtained.

### Second Embodiment

An explanation will now be below given of a second embodiment that is a modified example of the first embodiment. The explanation to the common element between the second embodiment and the first embodiment will be omitted accordingly to facilitate understanding, and different configurations between those embodiments will be mainly explained.

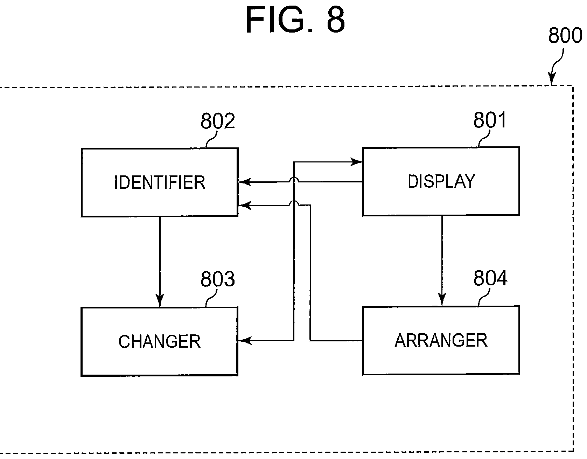

As illustrated in FIG. 8, a viewing device 800 according to the present embodiment includes a display 801, an identifier 802, a changer 803, and an arranger 804.

An explanation will be given at first of the arranger 804 to facilitate understanding.

The arranger 804 disposes a plurality of predetermined link elements in the content 401. Those link elements are set as the emphasis targets that are in the first embodiment.

Although the link elements are visible to the user in the first embodiment, the link elements are invisible in the present embodiment, and only the other portions of the content 401 are visible.

Example configurations of making the link elements invisible are to set a color attribute to transparent, set a display attribute to be hidden, and comment out the whole tag of the link elements, but the present invention is not limited to those configurations.

In the present embodiment, it is deemed that setting of the transparency to be equal to or higher than a predetermined threshold is within the concept of the invisualization.

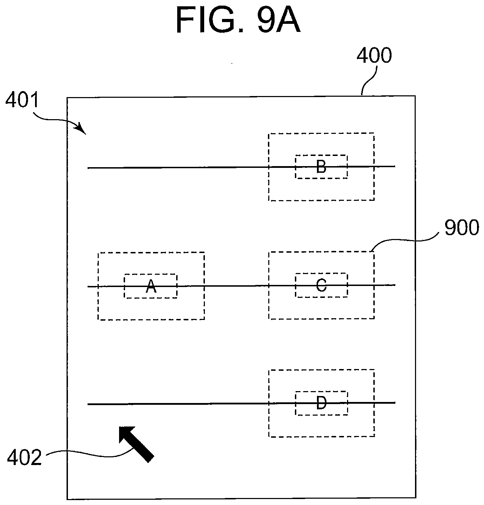

Conversely, example configurations of making the link elements visible are to change the color attribute from transparent to opaque, change the display attribute from hidden to display, and delete a comment tag. Moreover, in the present embodiment, it is deemed that setting of the transparency to be lower than the predetermined threshold is within the concept of the visualization. An invisible condition is illustrated in FIG. 9A.

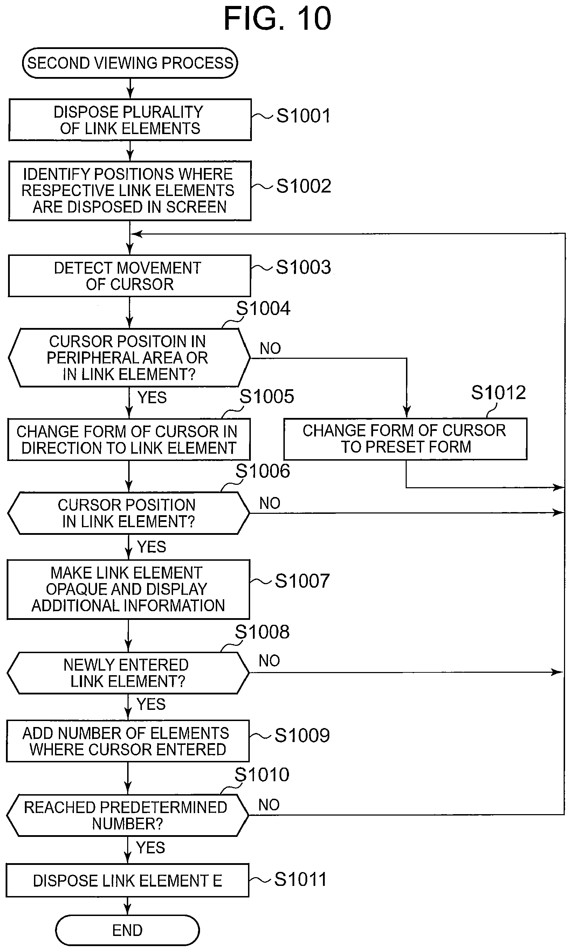

The changer 803 changes the form of a cursor 402 based on the link element disposed at a position closest to the displayed position of the cursor 402 on the screen 110 among the plurality of link elements. Processes of changing the form of the cursor 402 by the changer 803 will be discussed later with reference to the flowchart illustrated in FIG. 10.

The changer 803 surrounds a position where the predetermined link element is disposed on the screen 110, and if the displayed position of the cursor 402 on the screen 110 is included in a peripheral area 900 that does not include the area where such a link element is disposed on the screen 110, the changer changes the form of the cursor 402 to a form that approximates and indicates a direction from the displayed position of the cursor 402 on the screen 110 toward the displayed position of the predetermined link element on the screen 110. If not included, the changer changes the form of the cursor 402 to a preset form.

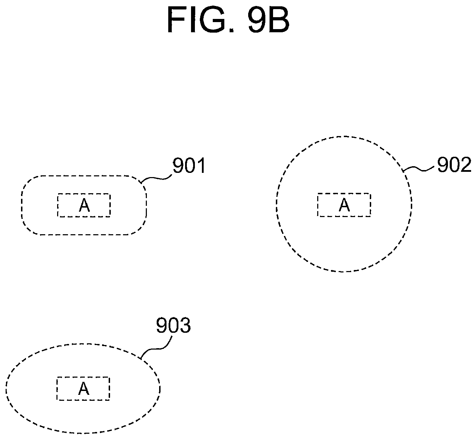

In this example, the peripheral area 900 is an area at a predetermined distance from the area where the link element is disposed. As illustrated in FIG. 9B, a peripheral area 901 is a rectangle having the four corners rounded, a peripheral area 902 is a circle around the link element, and a peripheral area 903 is an ellipse around the link element. The shapes of the peripheral areas are not limited to those shapes, and the peripheral areas may have a different shape link element by link element. The peripheral area 900 of the present embodiment is a rectangle having the link element disposed at the center thereof.

The identifier 802 identifies the position where the predetermined link element disposed in the content 401 is displayed on the screen 110.

The display 801 displays at least one of the numbers of the link elements where the cursor 402 newly enters, a predetermined number, and a number obtained by subtracting the number of the already entered elements from the predetermined number on the screen 110 together with the content 401 while the displayed position of the cursor 402 on the screen 110 is being included within the area where the link element is disposed. In this example, the term enter means that the cursor 402 enters the area where the link element is disposed.

The display 801 displays another predetermined piece of content on the screen 110 instead of the content 401 when the number of elements where the cursor 402 has entered among the plurality of link elements on the screen 110 reaches the predetermined number.

The arranger 804 disposes, on the screen 110 (virtual screen 400), the link element specifying the URL of another piece of content which can be displayed by the display 801 in the content 401.

An example viewing process according to the above-explained viewing device 800 will be explained in detail with reference to the flowchart illustrated in FIG. 10, and FIGS. 11A to 11C and FIGS. 12A to 12F.

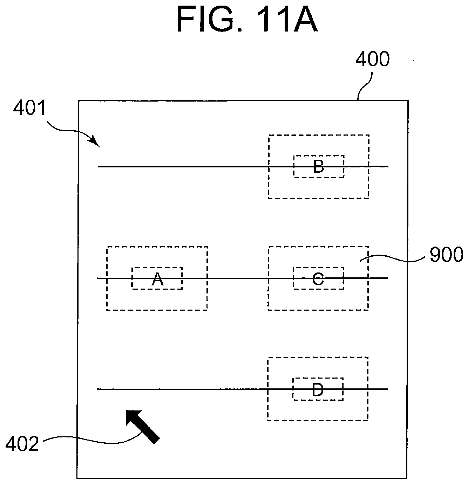

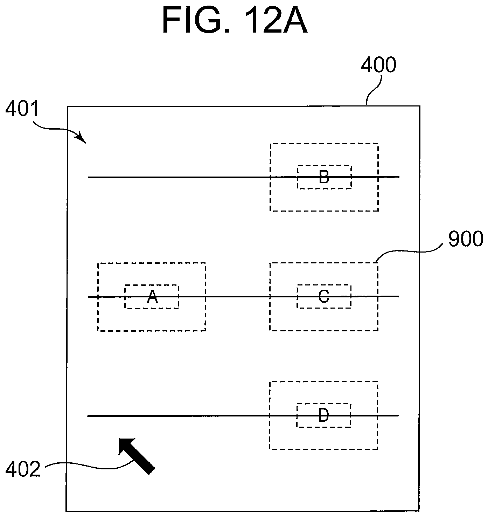

First, the user accesses the content 401 illustrated in FIGS. 11A to 11C and 12A to 12F, and provided by the web server 102 through the information processing device 100 via the communication network 101.

The CPU 103 of the information processing device 100 displays the content 401 on the screen 110 through the browser program stored in the ROM 104 or in the hard disk 106. The processes illustrated in the flowchart of FIG. 10 are processes by the viewing device 800 which runs the script program specified in the content 401.

As illustrated in FIG. 11A, when the content 401 is displayed on the screen 110, the arranger 804 disposes the link elements A, B, C, and D at random positions within the content 401 (step S1001). Those link elements are transparent, and are invisible on the screen 110.

The cursor 402 as a thin arrow shape is also displayed on the screen 110 in addition to the content 401.

The identifier 802 identifies a respective position for each of the link elements A, B, C, and D on the screen disposed by the arranger 804 in the step S1001 (step S1002).

Next, while the user is moving the cursor 402 by operating the keyboard 111 or the mouse 113, the movement of the cursor 402 is detected (step S1003).

During this operation, the changer 803 determines whether or not the cursor 402 is included in the peripheral area 900 of each link element, or in a displayed area where each link element is displayed (step S1004).

When no cursor 402 is included in the peripheral area 900 or the like (step S1004: NO), the changer 803 sets the form of the cursor 402 to the preset form (step S1012). Thereafter, the process returns to the step S1003, and a determination on whether or not the cursor 402 is included in the peripheral area 901 is continued.

When the cursor 402 is included in the peripheral area 900 or the like (step S1004: YES), the changer 803 changes the form of the cursor 402 to a form that approximates and indicates a direction from the displayed position of the cursor 402 on the screen 110 toward the displayed position of the predetermined link element on the screen 110 (step S1005).

When the cursor 402 is included in the area where the link element is displayed, a special cursor form may be adopted which indicates that the link element is present at the position of the cursor 402 itself instead of the cursor form indicating a direction from the position of the cursor 402 toward the displayed position of the link element.

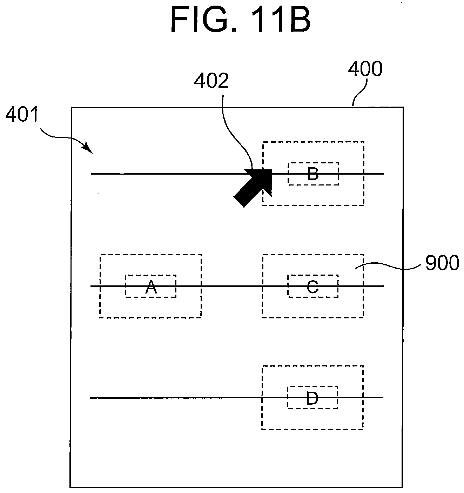

In an example case illustrated in FIG. 11B, regarding such a change in the form of the cursor 402, a direction is changed like the first embodiment, while at the same time, the thickness of the arrow is increased. FIG. 11B illustrates a condition in which the cursor 402 is included in the peripheral area 900 of the link element B.

Next, the display 801 determines whether or not the displayed position of the cursor 402 is included in the displayed area of the link element (step S1006).

When the displayed position of the cursor 402 is not included in the link element (step S1006: NO), the process returns to the step S1005, and a determination on whether or not the displayed position of the cursor 402 is included in the link element is continued.

When the displayed position of the cursor 402 is included in the link element (step S1006: YES), the display 801 makes the link element opaque so as to make the link element visible to the user.

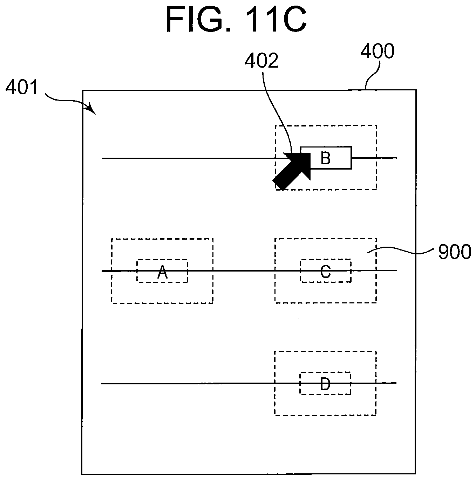

FIG. 11C illustrates that the cursor 402 is at the same position where the link element B is disposed, and the link element B is visualized and made visible.

A configuration may be employed in which the link element once made visible may be returned to be transparent after the cursor 402 moves away, or the opaque condition may be maintained afterward. In either configuration, when the user moves the cursor 402 in the virtual screen 400, and the cursor 402 reaches the hidden link element, such a link element becomes visible, and a form of entertainment like treasure hunting can be offered to the user. The second embodiment demonstrates a case in which the link element once made visible is returned to be transparent after the cursor 402 moves away therefrom.

The display 801 displays the predetermined number and the number of the link elements where the cursor 402 has entered as additional information 1200. FIGS. 12A to 12F illustrate how such information is displayed.

In FIG. 12A, since no cursor 402 is included in the displayed area of the link element, no additional information is displayed.

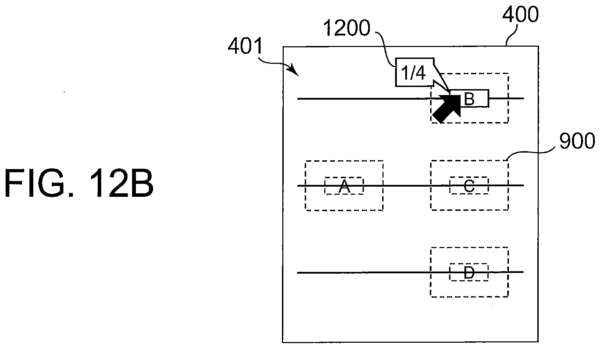

In FIG. 12B, the additional information 1200 is displayed as "1/4". In this case, 1 denotes the number of the link elements where the cursor 402 has entered, and 4 denotes the predetermined number.

This predetermined number is a number that causes, in step S1012 to be discussed later, the link element E specifying the URL of another predetermined content to be disposed in the content 401 when the user accomplishes that number. The above processes are the processes in step S1007.

Next, the display 801 determines whether or not the link element where the cursor has entered in the step S1007 is a newly entered link element (step S1008). In this example, the newly entered link element is a link element where no cursor 402 has entered since the content 401 has been displayed on the screen 110.

When the link element is not the newly entered link element (step S1008: NO), the process returns to the step S 1003 and a determination on whether or not the display position of the cursor 402 is included in the link element is continued.

Conversely, when the link element is the newly entered link element (step S1008: YES), the display 801 adds a number 1 to the number of the link elements where the cursor has entered (step S1009). This process causes the additional information 1200 displayed on the screen 110 to be updated.

Next, the display 801 determines whether or not the number of the link elements displayed in the step S1009 has become the predetermined number (step S1010).

When the number of the displayed link elements has not reached the predetermined number (step S1010: NO), the process returns to the step S1003 and a determination on whether or not the display position of the cursor 402 is included in the link element is continued.

When the number of the displayed link elements has become the predetermined number (step S1010: YES), the arranger 804 disposes, in the content 401, the link element E specifying the URL of another predetermined content (step S1011).

Another predetermined content includes, for example, information which gives a benefit to the user when being accessed. When the user accesses the URL specified by the link element E, a benefit is given to the user.

In addition, when the number of the displayed link elements reaches the predetermined number, another predetermined content may be automatically displayed on the screen 110.

FIGS. 12A to 12F illustrate processes of the number of the link elements where the cursor 402 has entered reaching the predetermined number in accordance with the flowchart illustrated in FIG. 10.

When the cursor 402 moves as illustrated in FIG. 12A and FIG. 12B, the additional information 1200 is displayed and the link element B which has been transparent is displayed in an opaque manner so as to become visible to the user.

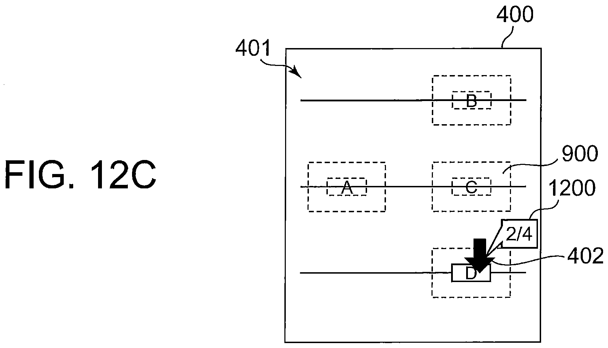

When the cursor 402 moves as illustrated in FIG. 12B and FIG. 12C, the additional information 1200 is updated and the link element D which has been transparent is displayed in an opaque manner and becomes visible to the user.

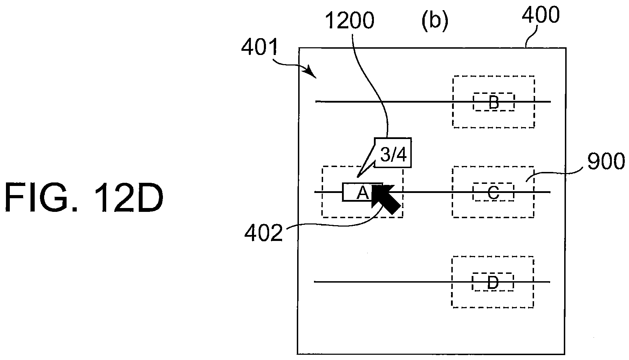

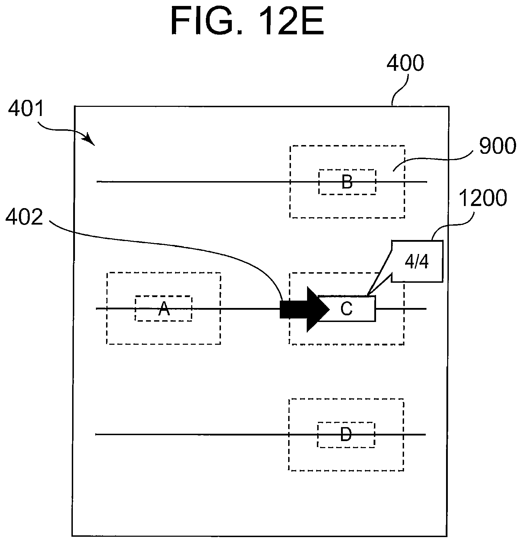

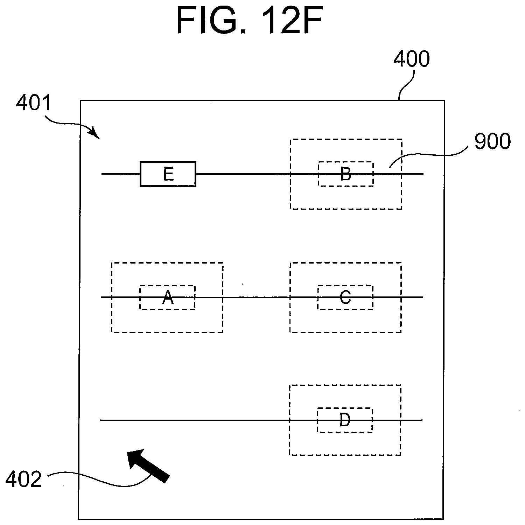

When the same processes are likewise repeated asin FIG. 12D and FIG. 12E, since the number of the link elements where the cursor 402 has entered reaches the predetermined number, the link element E specifying the URL of another predetermined content is disposed as illustrated in FIG. 12F.

In the present embodiment, the cursor 402 may enter the plurality of link elements in any order.

As explained above, according to the viewing device 800 of the present embodiment, since the user attempts to find the link elements made invisible in the content 401, it is expected that the time at which the user views the content 401 becomes long.

When the link elements made invisible are disposed at random positions in the content 401, since the user attempts to find those link elements all over the content 401, it is expected that the time at which the user views the content 401 becomes long, and opportunities that the user views other link elements disposed in the content 401 increase.

In the present configuration, the user attempts to find the hidden link elements A to D in the content 401 by moving the cursor 402, and when the user can find the predetermined number of the link elements, the link element E which is a guide to a new content can be obtained. As explained above, the user can be kept having the interest by giving an entertainment like a treasure hunting to the user, and an RPG (Roll Playing Game) can be realized by a simple implementation.

In the above explanation, the explanation was given of the example case in which the electronic documents described in HTML is the content, but a configuration can be employed which displays one image or a plurality of images disposed side by side on the screen 110 as content.

For example, a configuration can be employed which expresses a map of a virtual world by one image or a plurality of images disposed side by side, and which have emphasis targets that are places where treasures or the like is hidden.

According to this configuration, when the cursor moves near the treasure in the map of the virtual world, the change in the form of the cursor displays to the effect that the treasure is located at the near site and a direction from the cursor toward the treasure on the screen 110.

When the cursor overlaps a location where the treasure is hidden, the treasure is found, and when a certain number of treasures are found, the user can move to the map of a new virtual world.

In addition, a configuration may be employed in which the link elements set as the emphasis targets are all opaque but visible from the beginning. A configuration can be employed in which, for example, when the cursor moves near the link element that is the emphasis target, the form of the cursor changes, and when the cursor overlaps the link element, the additional information of the link element is displayed in a pop-up manner, and the same advantages as explained above can be obtained.

### Industrial Applicability

According to the present invention, a viewing device, a viewing method, a computer-readable recording medium whereon a program is recorded, and a script program are provided which are suitable for inducing a user to have an interest and a notice to a piece of content itself or to a specific part contained therein by indicating a direction to the specific part contained in the content through the form of a cursor.

### Description of Reference Numerals

- 100: Information processing device
- 101: Communication network
- 102: web server
- 103: CPU
- 104: ROM
- 105: RAM
- 106: Hard disk
- 107: Media controller
- 108: LAN
- 109: Video card
- 110: Screen
- 111: Keyboard
- 112: Speaker
- 113: Mouse
- 200: Viewing device
- 201: Display
- 202: Identifier
- 203: Changer
- 204: Detector
- 205: Setter
- 400: Virtual screen
- 401: Content
- 402: Cursor
- 403: Attention arrow
- 404: Attention line
- 405: Area
- 800: Viewing device
- 801: Display
- 802: Identifier
- 803: Changer
- 804: Arranger
- 900: Peripheral area
- 901: Peripheral area
- 902: Peripheral area
- 903: Peripheral area
- 1200: Additional information

## Claims

1. A viewing device (200; 800) comprising:
a display (201; 801) configured to display on a display screen (110), a piece of content and a cursor (402) configured to move based on an operation given by a user, the piece of content being part of content on a virtual screen (400) which extends outside the display screen (110);
an identifier (202; 802) configured to identify a position where a portion contained in the content and set as an emphasis target is on the virtual screen (400), the emphasis target not being displayed on the display screen, the emphasis target being a link element specifying a URL of other content; and
a changer (203; 803) configured to change a form of the cursor (402) in accordance with a direction from a position where the cursor is displayed to the identified position so as to indicate said direction.

2. The viewing device (200; 800) according to Claim 1, further comprising:
a detector (204) configured to detect an occasion of a predetermined event; and
a setter (205) configured to set the portion contained in the content (401) as the emphasis target and further configured to set again another portion contained in the content as the emphasis target when the occurrence of the predetermined event is detected.

3. The viewing device (200; 800) according to Claim 2, wherein
the content is a structured document including a plurality of elements,
the portion set as the emphasis target by the setter is any one of candidate elements that are elements to which a predetermined candidate attribute is added among the plurality of elements, and
the predetermined event occurs when the position where the cursor is displayed on the display screen overlaps an area where the candidate element set as the emphasis target is displayed on the display screen (110).

4. The viewing device (200; 800) according to Claim 3, wherein the setter is configured to set again at random as the emphasis target while giving a preference to the candidate element that has not been set as the emphasis target among the candidate elements since a display of the content is started.

5. The viewing device (200; 800) according to Claim 3 or 4, wherein
a next candidate attribute that specifies another candidate element in the content is given to at least some of the candidate elements in the content, and the setter is configured to, when the next candidate attribute is added to the candidate element set as the emphasis target, set again the emphasis target while giving a preference to the candidate element specified by the next candidate attribute.

6. The viewing device (200; 800) according to Claim 5, wherein
the display (201; 801) is configured to display the content on the display screen (110) in a scrollable manner, and the display (201; 801) is configured to, when the candidate element specified by the next candidate attribute of the candidate element set as the emphasis target is not displayed on the display screen (110), and when an occurrence of the predetermined event is detected, automatically scroll the content in such a way that a range of the content displayed on the display screen (110) becomes close to the candidate element specified by the next candidate attribute.

7. The viewing device (200; 800) according to Claim 6, wherein the display (201; 801) is configured to, when the candidate element set as the emphasis target becomes close to a boundary with the range or when the candidate element specified by the next candidate attribute of the candidate element set as the emphasis target is contained in the range, terminate the automatic scrolling.

8. The viewing device (200; 800) according to Claim 7, wherein the display (201; 801) is configured to move the cursor (402) to a position where the candidate element set as the emphasis target is displayed on the display screen (110) while the automatic scrolling is being performed.

9. The viewing device according to Claim 1, further comprising an arranger (804) that is configured to dispose a predetermined element set as a further emphasis target in the content (401).

10. The viewing device (200; 800) according to Claim 9, wherein
in a peripheral area (900, 901, 902, 903) surrounding a position where the predetermined element is disposed on the display screen (110) and not containing an area where the predetermined element is disposed on the display screen (110), when a display position of the cursor (402) on the display screen (110) is:
(a) contained, the changer is configured to change the cursor form to a form that approximates and indicates a direction from the position where the cursor (402) is displayed on the display screen (110) to the disposed position of the predetermined element on the display screen (110), and
(b) not contained, the changer is configured to change the cursor form back to a preset form.

11. The viewing device (200; 800) according to Claim 10, wherein
the arranger (804) is configured to dispose a plurality of the predetermined elements in the content,
the display (201; 801) is configured to display another predetermined content instead of the content on the display screen (110) or to display predetermined additional information together with the content on the display screen (110) when the cursor has entered a predetermined number of areas where a said predetermined element is disposed on the display screen (110).

12. The viewing device (200; 800) according to Claim 11, wherein the display (201; 801) is configured to display together with the content, at least one of following on the display screen (110):
(a) a number of areas in which a said element is disposed where the cursor (402) has entered;
(b) the predetermined number; and
(c) a number obtained by subtracting the number of the areas where the cursor has entered from the predetermined number,
while a displayed position of the cursor (402) on the display screen (110) is included in an area where the predetermined element is disposed.

13. The viewing device according to any one of Claims 9 to 12, wherein in the area where the predetermined element is disposed, when the displayed position of the cursor on the display screen is:
(a) included, the display is configured to make the predetermined element invisible on the display screen (110); or
(b) not included, the display is configured to make the predetermined element visible on the display screen (110).

14. A viewing method executed by a computer that displays, on a display screen (110), a piece of content and a cursor (402) moved based on an operation given by a user, the piece of content being part of content on a virtual screen (400) which extends outside the display screen, and the viewing method comprising:
an identifying step of identifying a position where a portion contained in the content and set as an emphasis target is on the virtual screen (400), the emphasis target not being displayed on the display screen (110), the emphasis target being a link element specifying a URL of other content; and
a changing step of changing a form of the cursor (402) in accordance with a direction from a position where the cursor (402) is displayed to the identified position so as to indicate said direction.

15. A computer-readable recording medium having stored therein instructions which, when executed by a computer, cause said computer which displays, on a display screen (110), a piece of content, which is part of content on a virtual screen (400) which extends outside the display screen (110), and a cursor (402) moved based on an operation given by a user to function as:
an identifier (202; 802) that identifies a position where a portion contained in the content and set as an emphasis target is on the virtual screen (400), the emphasis target not being displayed on the display screen (110), the emphasis target being a link element specifying a URL of other content; and
a changer (203;803) that changes a form of the cursor (402) in accordance with a direction from a position where the cursor (402) is displayed to the identified position so as to indicate said direction.

16. A script program comprising instructions which, when executed by a computer, cause said computer which functions, upon running a viewing program, as a display (201; 801) displaying a piece of content, which is part of content on a virtual screen (400) which extends outside the display screen (110), and a cursor (402) moved based on an operation given by a user on a display screen (110) to function as:
an identifier (202; 802) that identifies a position where a portion contained in the content and set as an emphasis target is on the virtual screen (400), the emphasis target not being displayed on the display screen, the emphasis target being a link element specifying a URL of other content; and
a changer (203; 803) that changes a form of the cursor (402) in accordance with a direction from a position where the cursor (402) is displayed to the identified position so as to indicate said direction.

## Patentansprüche

1. Betrachtungsvorrichtung (200, 800), mit:
einer Anzeige (201, 801), die ausgestaltet ist, auf einem Anzeigebildschirm (110) ein Inhaltsstück und einen Cursor (402) anzuzeigen, der ausgestaltet ist, sich auf Basis einer durch einen Benutzer gegebenen Bedienung zu bewegen, wobei das Inhaltsstück Teil von Inhalt auf einem virtuellen Bildschirm (400) ist, der sich über den Anzeigebildschirm (110) hinaus erstreckt,
einen Identifikator (202, 802), der ausgestaltet ist, eine Position zu identifizieren, an der sich ein Abschnitt, der in dem Inhalt enthalten ist und der als Hervorhebungsziel eingestellt ist, auf dem virtuellen Bildschirm (400) befindet, wobei das Hervorhebungsziel nicht auf dem Anzeigebildschirm angezeigt ist und das Hervorhebungsziel ein Link-Element ist, das eine URL anderen Inhalts spezifiziert, und
einem Änderer (203, 803), der ausgestaltet ist, eine Form des Cursors (402) entsprechend einer Richtung von einer Position, an der der Cursor angezeigt wird, zu der identifizierten Position zu ändern, um so die Richtung anzugeben.

2. Betrachtungsvorrichtung (200, 800) nach Anspruch 1, ferner mit:
einem Erfasser (204), der ausgestaltet ist, ein Auftreten eines vorbestimmten Ereignisses zu erfassen, und
einem Einsteller (205), der ausgestaltet ist, den Abschnitt, der in dem Inhalt (401) enthalten ist, als das Hervorhebungsziel einzustellen, und der ferner ausgestaltet ist, erneut einen anderen Abschnitt, der in dem Inhalt enthalten ist, als das Hervorhebungsziel einzustellen, wenn das Auftreten des vorbestimmten Ereignisses erfasst wird.

3. Betrachtungsvorrichtung (200, 800) nach Anspruch 2, wobei
der Inhalt ein strukturiertes Dokument mit mehreren Elementen ist,
der durch den Einsteller als das Hervorhebungsziel eingestellte Abschnitt eines von Kandidatenelementen ist, die Elemente aus den mehreren Elementen sind, denen ein vorbestimmtes Kandidatenattribut hinzugefügt ist, und
das vorbestimmte Ereignis auftritt, wenn die Position, an der der Cursor auf dem Anzeigebildschirm angezeigt wird, mit einem Bereich überlappt, in dem das Kandidatenelement, das als das Hervorhebungsziel eingestellt ist, auf dem Anzeigebildschirm (110) angezeigt wird.

4. Betrachtungsvorrichtung (200, 800) nach Anspruch 3, wobei der Einsteller ausgestaltet ist, erneut zufällig das Hervorhebungsziel einzustellen, wobei dem Kandidatenelement aus den Kandidatenelementen Präferenz gegeben wird, das, nachdem eine Anzeige des Inhalts gestartet wurde, nicht als das Hervorhebungsziel eingestellt wurde.

5. Betrachtungsvorrichtung (200, 800) nach Anspruch 3 oder 4, wobei
ein Nächster-Kandidat-Attribut, das ein anderes Kandidatenelement in dem Inhalt spezifiziert, zu wenigstens einem der Kandidatenelementen in dem Inhalt gegeben wird und
der Einsteller ausgestaltet ist, wenn das Nächster-Kandidat-Attribut zu dem Kandidatenelement hinzugefügt wird, als das Hervorhebungsziel erneut das Hervorhebungsziel einzustellen, wobei dem Kandidatenelement Präferenz gegeben wird, dass durch das Nächster-Kandidat-Attribut spezifiziert wird.

6. Betrachtungsvorrichtung (200, 800) nach Anspruch 5, wobei die Anzeige (201, 801) ausgestaltet ist, den Inhalt auf dem Anzeigebildschirm (110) in einer scrollbaren Weise anzuzeigen, und
die Anzeige (201, 801) ausgestaltet ist, wenn das Kandidatenelement, dass durch das Nächster-Kandidat-Attribut des Kandidatenelements, das als das Hervorhebungsziel eingestellt ist, spezifiziert wird, nicht auf dem Anzeigebildschirm (110) angezeigt wird und wenn ein Auftreten des vorbestimmten Ereignisses erfasst wird, automatisch den Inhalt in einer derartigen Weise zu scrollen, dass ein Bereich des Inhalts, der auf dem Anzeigebildschirm (110) angezeigt wird, in die Nähe des Kandidatenelements gelangt, dass durch das Nächster-Kandidat-Attribut spezifiziert wird.

7. Betrachtungsvorrichtung (200, 800) nach Anspruch 6, wobei die Anzeige (201, 801) ausgestaltet ist, wenn das Kandidatenelement, das als das Hervorhebungsziel eingestellt ist, in die Nähe einer Grenze mit dem Bereich kommt oder wenn das Kandidatenelement, das durch das Nächster-Kandidat-Attribut des Kandidatenelements spezifiziert wird, das als das Hervorhebungsziel eingestellt ist, in dem Bereich enthalten ist, das automatische Scrollen zu beenden.

8. Betrachtungsvorrichtung (200, 800) nach Anspruch 7, wobei die Anzeige (201, 801) ausgestaltet ist, den Cursor (402) zu einer Position zu bewegen, an der das Kandidatenelement, das als das Hervorhebungsziel eingestellt ist, auf dem Anzeigebildschirm (110) angezeigt wird, während das automatische Scrollen durchgeführt wird.

9. Betrachtungsvorrichtung nach Anspruch 1, ferner mit einem Anordner (804), der ausgestaltet ist, ein vorbestimmtes Element, das als ein weiteres Hervorhebungsziel in dem Inhalt (401) eingestellt ist, anzuordnen.

10. Betrachtungsvorrichtung (200, 800) nach Anspruch 9, wobei
wenn eine Anzeigeposition des Cursors (402) auf dem Anzeigebildschirm (110) in einem Randbereich (900, 901, 902, 903), der eine Position umgibt, an der das vorbestimmte Element auf dem Anzeigebildschirm (110) angeordnet ist, und nicht einen Bereich enthält, an dem das vorbestimmte Element auf dem Anzeigebildschirm (110) angeordnet ist,
(a) enthalten ist, der Änderer ausgestaltet ist, die Cursor-Form zu einer Form zu ändern, die sich einer Richtung von der Position, an der der Cursor (402) auf dem Anzeigebildschirm (110) angezeigt wird, zu der angeordneten Position des vorbestimmten Elements auf dem Anzeigebildschirm (110) annähert und diese angibt, und
(b) nicht enthalten ist, der Änderer ausgestaltet ist, den Cursor zurück in eine voreingestellte Form zu ändern.

11. Betrachtungsvorrichtung (200, 800) nach Anspruch 10, wobei
der Anordner (804) ausgestaltet ist, mehrere der vorbestimmten Elemente in dem Inhalt anzuordnen,
die Anzeige (201, 801) ausgestaltet ist, anderen vorbestimmten Inhalt anstelle des Inhalts auf dem Anzeigebildschirm (110) anzuzeigen oder vorbestimmte zusätzliche Informationen zusammen mit dem Inhalt auf dem Anzeigebildschirm (110) anzuzeigen, wenn der Cursor eine vorbestimmte Zahl von Bereichen betreten hat, an denen ein vorbestimmtes Element auf dem Anzeigebildschirm (110) angeordnet ist.

12. Betrachtungsvorrichtung (200, 800) nach Anspruch 11, wobei die Anzeige (201,801) ausgestaltet ist, während einer angezeigte Position des Cursors (402) auf dem Anzeigebildschirm (11) in einem Bereich enthalten ist, in dem das vorbestimmte Element angeordnet ist, zusammen mit dem Inhalt wenigstens eines des Folgenden auf dem Anzeigebildschirm (110) anzuzeigen:
(a) eine Zahl von Bereichen, in denen ein besagtes Element angeordnet ist, in die der Cursor (402) eingetreten ist,
(b) die vorbestimmte Zahl, und
(c) eine Zahl, die erhalten wird, durch Subtrahieren der Zahl von Bereichen, in die der Cursor eingetreten ist, von der vorbestimmten Zahl.

13. Betrachtungsvorrichtung nach einem der Ansprüche 9 bis 12, wobei wenn die Anzeigeposition des Cursors auf dem Anzeigebildschirm in dem Bereich, in dem das vorbestimmte Element angeordnet ist,
(a) enthalten ist, die Anzeige ausgestaltet ist, das vorbestimmte Element auf dem Anzeigebildschirm (110) unsichtbar zu machen, oder
(b) nicht enthalten ist, die Anzeige ausgestaltet ist, das vorbestimmte Element auf dem Anzeigebildschirm (110) sichtbar zu machen.

14. Betrachtungsverfahren, das durch einen Computer ausgeführt wird, der auf einem Anzeigebildschirm (110) ein Inhaltsstück und einen Cursor (402) anzeigt, der sich auf Basis einer durch einen Benutzer gegebenen Bedienung bewegt, wobei das Inhaltsstück Teil von Inhalt auf einem virtuellen Bildschirm (400) ist, der sich über den Anzeigebildschirm (110) hinaus erstreckt, und das Betrachtungsverfahren umfasst:
einen Identifikationsschritt des Identifizierens einer Position, an der sich ein Abschnitt, der in dem Inhalt enthalten ist und der als Hervorhebungsziel eingestellt ist, auf dem virtuellen Bildschirm (400) befindet, wobei das Hervorhebungsziel nicht auf dem Anzeigebildschirm (110) angezeigt ist und das Hervorhebungsziel ein Link-Element ist, das eine URL anderen Inhalts spezifiziert, und
einen Änderungsschritt des Änderns einer Form des Cursors (402) entsprechend einer Richtung von einer Position, an der der Cursor angezeigt wird, zu der identifizierten Position, um so die Richtung anzugeben.

15. Computerlesbares Aufzeichnungsmedium, auf dem Instruktionen gespeichert sind, die, wenn sie durch einen Computer ausgeführt werden, den Computer, der auf einem Anzeigebildschirm (110) ein Inhaltsstück, das Teil von Inhalt auf einem virtuellen Bildschirm (400) ist, der sich über den Anzeigebildschirm (110) hinaus erstreckt, und einen Cursor (402) anzeigt, der sich auf Basis einer durch einen Benutzer gegebenen Bedienung bewegt, dazu veranlassen, als
ein Identifikator (202, 802), der eine Position identifiziert, an der sich ein Abschnitt, der in dem Inhalt enthalten ist und der als Hervorhebungsziel eingestellt ist, auf dem virtuellen Bildschirm (400) befindet, wobei das Hervorhebungsziel nicht auf dem Anzeigebildschirm angezeigt ist und das Hervorhebungsziel ein Link-Element ist, das eine URL anderen Inhalts spezifiziert, und
ein Änderer (203, 803) zu funktionieren, der eine Form des Cursors (402) entsprechend einer Richtung von einer Position, an der der Cursor angezeigt wird, zu der identifizierten Position ändert, so um die Richtung anzugeben.

16. Skript-Programm mit Instruktionen gespeichert sind, die, wenn sie durch einen Computer ausgeführt werden, den Computer, der beim Ausführen eines Betrachtungsprogramms als eine Anzeige (201, 801) funktioniert, die auf einem Anzeigebildschirm (110) ein Inhaltsstück, das Teil von Inhalt auf einem virtuellen Bildschirm (400) ist, der sich über den Anzeigebildschirm (110) hinaus erstreckt, und einen Cursor (402) anzeigt, der sich auf Basis einer durch einen Benutzer gegebenen Bedienung bewegt, dazu veranlassen, als
ein Identifikator (202, 802), der eine Position identifiziert, an der sich ein Abschnitt, der in dem Inhalt enthalten ist und der als Hervorhebungsziel eingestellt ist, auf dem virtuellen Bildschirm (400) befindet, wobei das Hervorhebungsziel nicht auf dem Anzeigebildschirm angezeigt ist und das Hervorhebungsziel ein Link-Element ist, das eine URL anderen Inhalts spezifiziert, und
ein Änderer (203, 803) zu funktionieren, der eine Form des Cursors (402) entsprechend einer Richtung von einer Position, an der der Cursor angezeigt wird, zu der identifizierten Position ändert, so um die Richtung anzugeben.

## Revendications

1. Dispositif de visualisation (200 ; 800) comprenant :
un afficheur (201 ; 801) configuré pour afficher, sur un écran d'affichage (110), un élément de contenu et un curseur (402) configuré pour se déplacer sur la base d'une opération donnée par un utilisateur, l'élément de contenu étant une partie de contenu sur un écran virtuel (400) qui s'étend à l'extérieur de l'écran d'affichage (110) ;
un dispositif d'identification (202 ; 802) configuré pour identifier une position où une partie contenue dans le contenu et établie en tant que cible de mise en évidence est sur l'écran virtuel (400), la cible de mise en évidence n'étant pas affichée sur l'écran d'affichage, la cible de mise en évidence étant un élément de lien spécifiant une adresse Web d'un autre contenu ; et
un dispositif de changement (203 ; 803) configuré pour changer une forme du curseur (402) conformément à une direction d'une position où le curseur est affiché à la position identifiée de manière à indiquer ladite direction.

2. Dispositif de visualisation (200 ; 800) selon la revendication 1, comprenant en outre :
un détecteur (204) configuré pour détecter une occasion d'un événement prédéterminé ; et
un dispositif d'établissement (205) configuré pour établir la partie contenue dans le contenu (401) en tant que cible de mise en évidence et configuré en outre pour établir de nouveau une autre partie contenue dans le contenu en tant que cible de mise en évidence lorsque l'apparition de l'événement prédéterminé est détectée.

3. Dispositif de visualisation (200 ; 800) selon la revendication 2, dans lequel :
le contenu est un document structuré comprenant une pluralité d'éléments,
la partie établie en tant que cible de mise en évidence par le dispositif d'établissement est l'un quelconque d'éléments candidats qui sont des éléments auxquels un attribut candidat prédéterminé est ajouté parmi la pluralité d'éléments, et
l'événement prédéterminé se produit lorsque la position où le curseur est affiché sur l'écran d'affichage recouvre une zone où l'élément candidat établi en tant que cible de mise en évidence est affiché sur l'écran d'affichage (110).

4. Dispositif de visualisation (200 ; 800) selon la revendication 3, dans lequel le dispositif d'établissement est configuré pour établir de nouveau, de manière aléatoire, la cible de mise en évidence tout en donnant une préférence à l'élément candidat qui n'a pas été établi en tant que cible de mise en évidence parmi les éléments candidats depuis qu'un affichage du contenu a débuté.

5. Dispositif de visualisation (200 ; 800) selon la revendication 3 ou 4, dans lequel :
un attribut candidat suivant qui spécifie un autre élément candidat dans le contenu est communiqué à au moins certains des éléments candidats dans le contenu, et
le dispositif d'établissement est configuré pour, lorsque l'attribut candidat suivant est ajouté à l'élément candidat établi en tant que cible de mise en évidence, établir de nouveau la cible de mise en évidence tout en donnant une préférence à l'élément candidat spécifié par l'attribut candidat suivant.

6. Dispositif de visualisation (200 ; 800) selon la revendication 5, dans lequel :
l'afficheur (201 ; 801) est configuré pour afficher le contenu sur l'écran d'affichage (110) d'une manière pouvant défiler, et
l'afficheur (201 ; 801) est configuré pour, lorsque l'élément candidat spécifié par l'attribut candidat suivant de l'élément candidat établi en tant que cible de mise en évidence n'est pas affiché sur l'écran d'affichage (110), et lorsqu'une apparition de l'événement prédéterminé est détectée, faire défiler automatiquement le contenu de manière à ce qu'une plage du contenu affiché sur l'écran d'affichage (110) devienne proche de l'élément candidat spécifié par l'attribut candidat suivant.

7. Dispositif de visualisation (200 ; 800) selon la revendication 6, dans lequel l'afficheur (201 ; 801) est configuré pour, lorsque l'élément candidat établi en tant que cible de mise en évidence devient proche d'une frontière avec la plage ou lorsque l'élément candidat spécifié par l'attribut candidat suivant de l'élément candidat établi en tant que cible de mise en évidence est contenu dans la plage, mettre fin au défilement automatique.

8. Dispositif de visualisation (200 ; 800) selon la revendication 7, dans lequel l'afficheur (201, 801) est configuré pour déplacer le curseur (402) à une position où l'élément candidat établi en tant que cible de mise en évidence est affiché sur l'écran d'affichage (110) alors que le défilement automatique est effectué.

9. Dispositif de visualisation selon la revendication 1, comprenant en outre un dispositif d'agencement (804) qui est configuré pour disposer un élément prédéterminé établi en tant que cible de mise en évidence supplémentaire dans le contenu (401).

10. Dispositif de visualisation (200 ; 800) selon la revendication 9, dans lequel :
dans une zone périphérique (900, 901, 902, 903) entourant une position où l'élément prédéterminé est disposé sur l'écran d'affichage (110) et ne contenant pas une zone où l'élément prédéterminé est disposé sur l'écran d'affichage (110), lorsqu'une position d'affichage du curseur (402) sur l'écran d'affichage (110) :
(a) est contenue, le dispositif de changement est configuré pour changer la forme du curseur en une forme qui s'approche d'une, et indique une, direction de la position où le curseur (402) est affiché sur l'écran d'affichage (110) à la position de disposition de l'élément prédéterminé sur l'écran d'affichage (110), et
(b) n'est pas contenue, le dispositif de changement est configuré pour changer la forme du curseur de retour en une forme prédéterminée.

11. Dispositif de visualisation (200 ; 800) selon la revendication 10, dans lequel :
le dispositif d'agencement (804) est configuré pour disposer une pluralité des éléments prédéterminés dans le contenu,
l'afficheur (201 ; 801) est configuré pour afficher un autre contenu prédéterminé au lieu du contenu sur l'écran d'affichage (110) ou pour afficher des informations supplémentaires prédéterminées avec le contenu sur l'écran d'affichage (110) lorsque le curseur est entré dans un nombre prédéterminé de zones où un dit élément prédéterminé est disposé sur l'écran d'affichage (110).

12. Dispositif de visualisation (200 ; 800) selon la revendication 11, dans lequel l'afficheur (201 ; 801) est configuré pour afficher, avec le contenu, au moins l'un des éléments qui suit sur l'écran d'affichage (110) :
(a) un nombre de zones dans lesquelles undit élément est disposé où le curseur (402) est entré ;
(b) le nombre prédéterminé ; et
(c) un nombre obtenu en soustrayant le nombre des zones où le curseur est entré du nombre prédéterminé,
alors qu'une position affichée du curseur (402) sur l'écran d'affichage (110) est incluse dans une zone où l'élément prédéterminé est disposé.

13. Dispositif de visualisation selon l'une quelconque des revendications 9 à 12, dans lequel dans la zone où l'élément prédéterminé est disposé, lorsque la position affichée du curseur sur l'écran d'affichage :
(a) est incluse, l'afficheur est configuré pour rendre l'élément prédéterminé invisible sur l'écran d'affichage (110) ; ou
(b) n'est pas incluse, l'afficheur est configuré pour rendre l'élément prédéterminé visible sur l'écran d'affichage (110).

14. Procédé de visualisation exécuté par un ordinateur qui affiche, sur un écran d'affichage (110), un élément de contenu et un curseur (402) déplacé sur la base d'une opération donnée par un utilisateur, l'élément de contenu étant une partie de contenu sur un écran virtuel (400) qui s'étend à l'extérieur de l'écran d'affichage, et le procédé de visualisation comprenant :
une étape d'identification pour identifier une position où une partie contenue dans le contenu et établie en tant que cible de mise en évidence est sur l'écran virtuel (400), la cible de mise en évidence n'étant pas affichée sur l'écran d'affichage (110), la cible de mise en évidence étant un élément de lien spécifiant une adresse Web d'un autre contenu ; et
une étape de changement pour changer une forme du curseur (402) conformément à une direction d'une position où le curseur (402) est affiché à la position identifiée de manière à indiquer ladite direction.

15. Support d'enregistrement pouvant être lu par un ordinateur dans lequel des instructions sont mémorisées qui, lorsqu'elles sont exécutées par un ordinateur, amènent ledit ordinateur qui affiche, sur un écran d'affichage (110), un élément de contenu, qui est une partie de contenu sur un écran virtuel (400) qui s'étend à l'extérieur de l'écran d'affichage (110), et un curseur (402) déplacé sur la base d'une opération donnée par un utilisateur, à fonctionner en tant que :
dispositif d'identification (202 ; 802) qui identifie une position où une partie contenue dans le contenu et établie en tant que cible de mise en évidence est sur l'écran virtuel (400), la cible de mise en évidence n'étant pas affichée sur l'écran d'affichage (110), la cible de mise en évidence étant un élément de lien spécifiant une adresse Web d'un autre contenu ; et
dispositif de changement (203 ; 803) qui change une forme du curseur (402) conformément à une direction d'une position où le curseur (402) est affiché à la position identifiée de manière à indiquer ladite direction.

16. Programme de script comprenant des instructions qui, lorsqu'elles sont exécutées par un ordinateur, amènent ledit ordinateur qui fonctionne, lors de l'exécution d'un programme de visualisation, en tant qu'afficheur (201 ; 801) affichant un élément de contenu, qui est une partie de contenu sur un écran virtuel (400) qui s'étend à l'extérieur de l'écran d'affichage (110), et un curseur (402) déplacé sur la base d'une opération donnée par un utilisateur sur un écran d'affichage (110), à fonctionner en tant que :
dispositif d'identification (202 ; 802) qui identifie une position où une partie contenue dans le contenu et établie en tant que cible de mise en évidence est sur l'écran virtuel (400), la cible de mise en évidence n'étant pas affichée sur l'écran d'affichage, la cible de mise en évidence étant un élément de lien spécifiant une adresse Web d'un autre contenu ; et
dispositif de changement (203 ; 803) qui change une forme du curseur (402) conformément à une direction d'une position où le curseur (402) est affiché à la position identifiée de manière à indiquer ladite direction.
